# EUROPEAN PATENT APPLICATION

(11) **EP 1 717 324 A1**
(43) Date of publication of application: **02.11.2006**
(21) Application number: 06252114.1
(22) Date of filing: 18.04.2006
(51) Int. Cl.: C21D 1/18, C21D 9/08, C21D 9/02, B60G 21/055

(54) **Stabilizer bar**

(30) Priority: 29.04.2005 US 118198
(71) Applicant: Meritor Suspension Systems Company, U.S., Troy, Michigan 48084 (US)
(72) Inventor: Haiderer, Thomas D., Goodrich, Michigan 48438 (US); Binno, Michael P., Troy, Michigan 48083 (US)
(74) Representative: Jones, John Bryn

(57) **Abstract**

A tubular stabilizer bar for a vehicle suspension is formed from an asquenched steel material that is not subjected to a tempering process, and which has a hardness of at least 40 Rockwell C. The stabilizer bar includes an ultimate tensile strength that is greater than 200 ksi with a ratio of yield strength to ultimate tensile strength that is no more than .9. The stabilizer bar is significantly harder and has significantly improved fatigue life without compromising ductility, when compared with prior designs.

## Description

### TECHNICAL FIELD

The subject invention relates to a tubular stabilizer bar made from an as-quenched, low carbon steel, which provides a desired hardness to improve fatigue life.

### BACKGROUND OF THE INVENTION

Stabilizer bars for vehicle suspensions are typically formed from a medium or high carbon content steel that is quenched, tempered, and then painted. Quenching produces martensite, which is very hard but brittle. Brittle material has a tendency to crack, which can result in an overall reduction in fatigue life of a component. The stabilizer bars are tempered to reduce the brittleness.

One disadvantage with this tempering process is that while brittleness is reduced, the overall hardness, ultimate tensile strength, and yield strength are also reduced. This traditional quench and temper process provides a hardness, ultimate tensile strength, and yield strength combination that produces a stabilizer bar with a less than desired fatigue life. The application of paint, which requires a curing process, can further reduce hardness, ultimate tensile strength, and yield strength.

A stabilizer bar made according to this traditional process typically has a ratio of yield strength to ultimate tensile strength of about .95. Further, the stabilizer bar made according to this process has a hardness value that is typically around 37 Rockwell C. This combination of properties provides a less than desired fatigue life for a stabilizer bar.

Thus, it is desirable to have a heat treat process for a stabilizer bar that produces an improved combination of hardness, ultimate tensile strength, and yield strength to provide a stabilizer bar having an improved fatigue life.

### SUMMARY OF THE INVENTION

A stabilizer bar for a vehicle suspension includes a tubular body that is processed to provide a minimum hardness of at least 40 Rockwell C. The hardness of at least 40 Rockwell C is provided by an as-quenched steel material that is not subjected to tempering. The as-quenched steel material has a carbon content of .07-.40%. The tubular body has an ultimate tensile strength of at least 200 ksi and has a ratio of yield strength to ultimate tensile strength that is no more than .9. Further, the ductility properties are satisfactorily maintained and are indicated by a percent elongation that is generally greater than 15.5% and a percent reduction in area that is greater than 46%.

In one example, paint is applied to the tubular body to provide a protective coating. The paint is then cured. Curing the paint provides a reduction in ultimate tensile strength and hardness. However, the ultimate tensile strength is at least 200 ksi and the hardness is at least 40 Rockwell C even after curing.

By eliminating tempering from a stabilizer bar manufacturing process, manufacturing costs are reduced. Further, the as-quenched stabilizer bar provides increased hardness and significantly improved fatigue life, without compromising ductility, when compared to prior designs.

These and other features of the present invention can be best understood from the following specification and drawings, the following of which is a brief description.

### BRIEF DESCRIPTION OF THE DRAWINGS

Figure 1 is a perspective view of a stabilizer bar for a vehicle suspension incorporating the subject invention.
Figure 2 is a cross-section view taken at lines 2 of Figure 1.

### DETAILED DESCRIPTION OF THE PREFERRED EMBODIMENT

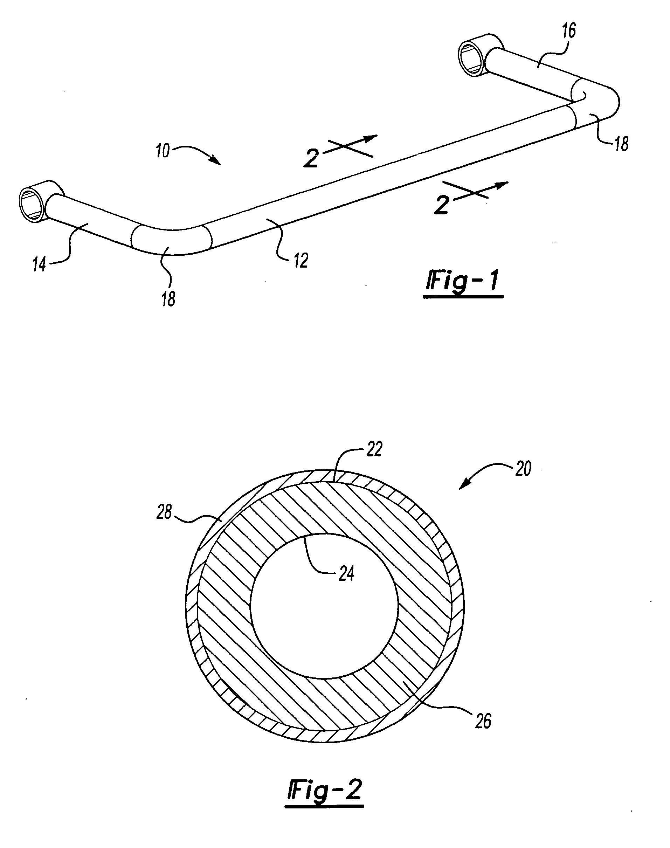

A stabilizer bar is shown generally at 10 in Figure 1. The stabilizer bar 10 is formed to have a U-shape with a center portion 12 and first and second transversely extending legs 14, 16. Radiused bends 18 transition from the center portion 12 to the first and second transversely extending legs 14, 16. The first and second transversely extending legs 14, 16 are each attached to a suspension trailing arm or lower control arm (not shown) as known.

The stabilizer bar 10 includes a tubular body 20 (see Figure 2). The tubular body 20 includes an outer surface 22 and an inner surface 24 that are spaced apart to define a wall thickness 26. Wall thickness 26 can vary as needed to provide desired vehicle roll resistance.

The subject invention provides a stabilizer bar 10 that is made from a lower carbon content steel material that is subjected to a heat treating process that does not include tempering. Any type of lower carbon content steel can be used. Typically, a lower carbon content steel includes, by weight, about .07-.40% carbon (C), in addition to other known elements. Preferably, the carbon content is approximately .20-.35%. The stabilizer bar 10 is preferably made from this type, or a similar type, of lower carbon content steel, however, it should be understood that the subject invention could provide benefits for carbon steels having lower or higher ranges of carbon content.

As mentioned, the material that forms the stabilizer bar 10 is processed with a heat treat that does not include tempering. Due to the low carbon content of the steel used to form the stabilizer bar 10, quenching is all that is required to achieve a desired combination of hardness, ultimate tensile strength, and yield strength. As known, quenching involves heating a material to a desired temperature for a desired length of time and then immersing the heated material in a liquid bath to cool the material. This process provides a desired microstructure for the material. Temperatures, times, and types of liquid baths can be varied as known to achieve a final desired microstructure.

The subject invention provides a stabilizer bar 10 formed from the low carbon content steel, which is quenched to achieve a hardness of at least 40 Rockwell C. Preferably, the hardness is at least 42 Rockwell C or higher. During quenching, the low carbon content steel forms self-tempered martensite having a desired combination of properties that do not require any additional heat treat. The stabilizer bar 10 made from this process includes an ultimate tensile strength of at least 200 ksi and a yield strength of at least 170 ksi. Further, a ratio of yield strength to ultimate tensile strength is approximately .9 or less. No tempering is required to achieve this combination of material properties and ductility properties are not compromised.

The stabilizer bar 10 formed from the material subjected to this process has sufficient ductility, such that the previously required tempering step can be eliminated.

In one example, a paint coat 28 is applied to the outer surface 22 of the stabilizer bar 10. The paint coat 28 is cured, as known, to achieve desired coating characteristics. Curing the paint coat 28 provides a reduction in ultimate tensile strength and hardness. However, the ultimate tensile strength is at least 200 ksi and the hardness is at least 40 Rockwell C even after curing.

When compared with a tubular stabilizer bar made from the traditional process where the stabilizer bar was quenched, tempered, and painted, the subject stabilizer bar 10 has significantly higher ultimate tensile strength, yield strength, and hardness properties. Additionally, fatigue life (B10) of the stabilizer bar 10 is also improved.

For an as-quenched stabilizer bar 10 that does not include a paint coat 28, yield strength is about 112%, ultimate tensile strength is about 145%, and hardness is about 130% of that of the corresponding properties for the traditionally processed stabilizer bar. Fatigue life is about 150% of that of the traditionally processed stabilizer bar. In one example, the as-quenched stabilizer bar 10 without the paint coat 28 includes an ultimate tensile strength of 242 ksi, a yield strength of 180 ksi (ratio of yield strength to ultimate tensile strength being .75), and a hardness of 47 Rockwell C.

Further, ductility is not compromised as percent elongation is maintained at at least 15.5% and percent reduction of area is at least 46%. The percent elongation is thus at least 86% of that which would be achieved with the traditional process. Percent reduction in area is at least 80% of that achieved with the traditional process. These percentages provide a desired ductility level for the stabilizer bar 10, without requiring tempering. This significantly reduces processing costs.

For an as-quenched stabilizer bar 10 that includes the paint coat 28, yield strength is about 108%, ultimate tensile strength is about 120%, and hardness is about 116% of that of the corresponding properties for the traditionally processed stabilizer bar. Fatigue life is about 130% of that of the traditionally processed stabilizer bar. In one example, the as-quenched stabilizer bar 10 with the paint coat 28 includes an ultimate tensile strength of 202 ksi, a yield strength of 174 ksi (ratio of yield strength to ultimate tensile strength being .86), a percent elongation of 16%, a percent reduction of area of 49.5%, and a hardness of 42 Rockwell C. This can be compared to a stabilizer bar that is quenched, tempered, and painted. This traditionally formed stabilizer bar has an ultimate tensile strength of 167 ksi, a yield strength of 161 ksi, a hardness of 36 Rockwell C, a percent elongation of 18%, and a percent reduction area of 58%.

Using a lower carbon content steel and eliminating tempering from the heat treat process for a stabilizer bar increases hardness, improves fatigue life, and provides a lower cost process than traditionally used. By utilizing an as-quenched material, a desired combination of material properties is achieved, which results in a significant increase in fatigue life compared to prior stabilizer bars.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A method for forming a tubular stabilizer bar including:
(a) quenching stabilizer bar tubing material formed from a lower carbon content steel having a carbon content of approximately .07-.40% to produce an as-quenched stabilizer bar tube; and
(b) forming a final stabilizer bar from the as-quenched stabilizer bar tube from step (a) having a hardness of at least 40 Rockwell C.

2. The method according to claim 1 including the steps of applying a paint to the as-quenched stabilizer bar tube and curing the paint subsequent to steps (a) or (b).

3. The method according to claim 2 wherein step (a) provides the as-quenched stabilizer bar tube with a first hardness value and wherein curing the paint provides the as-quenched stabilizer bar tube with a second hardness value that is less than the first hardness value.

4. The method according to any preceding claim wherein step (b) includes providing the hardness of at least 40 Rockwell C without tempering the as-quenched stabilizer bar tube subsequent to step (a).

5. The method according to claim 4 including providing the final stabilizer bar with an ultimate tensile strength of at least 200 ksi.

6. The method according to claim 1 wherein step (a) is the only heat treating step applied to the stabilizer bar tubing material.

7. The method according to any preceding claim wherein the hardness is at least 42 Rockwell C.

8. The method according to any preceding claim wherein the carbon content is approximately .20-.35%.

9. A stabilizer bar for a suspension assembly comprising:
a tubular body having a hardness of at least 40 Rockwell C without tempering.

10. The stabilizer bar according to claim 9 wherein said tubular body is comprised of an as-quenched lower carbon steel material, and preferably said tubular body is non-tempered.

11. The stabilizer bar according to claims 9 or 10 wherein said tubular body includes a cured paint coating.

12. The stabilizer bar according to any of claims 9 to 11 wherein said tubular body is formed from a material having a ratio of yield strength to ultimate tensile strength that is less than .9, and preferably said material has an ultimate tensile strength of at least 200 ksi.

13. The stabilizer bar according to any of claims 9 to 12 wherein said hardness is at least 42 Rockwell C.

14. The stabilizer bar according to any of claims 9 to 13 wherein said tubular body has a percent elongation property of at least 15% and a percent reduction in area property of at least 46%.

15. The stabilizer bar according to any of claim 9 to 14 wherein said tubular body is formed from a lower carbon content steel having a carbon content of approximately .07-.40%, and preferably wherein the carbon content is approximately .20-.35%.
